(19) Europäisches Patentamt
European Patent Office
Office européen des brevets

(11) **EP 3 059 707 A1**

(12) **EUROPEAN PATENT APPLICATION**

(43) Date of publication:
**24.08.2016 Bulletin 2016/34**

(51) Int Cl.:
**G06Q 50/14** (2012.01)    **G06Q 30/06** (2012.01)
**G06Q 10/02** (2012.01)

(21) Application number: **15290036.1**

(22) Date of filing: **17.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.S.**
**06410 Biot (FR)**

(72) Inventors:
• **Pasero, David**
  **06250 Mougins (FR)**

• **Zhao, Haixiang**
  **London SE8 4HQ (GB)**
• **Canis, Laure**
  **06300 Nice (FR)**
• **Dor, Pierre**
  **06140 Vence (FR)**
• **Zmerli, Feten**
  **06160 Juans-les-Pins (FR)**

(74) Representative: **Samson & Partner Patentanwälte mbB**
**Widenmayerstraße 6**
**80538 München (DE)**

(54) **Personalized ranking for search results of a travel-related database query**

(57)    Methods, systems, and computer program products for processing database query results. Query results are retrieved from a database of travel itineraries based on search criteria provided by a traveler, and a subset of travel itineraries selected from the search results based on a composite profile. The traveler may identify which travel itineraries of the subset they prefer, and the result of this selection used to update a probabilistic profile of the traveler. The search results may be re-ranked using an updated composite profile, and a new subset of travel itineraries selected based on the re-ranking. The traveler may indicate which travel itinerary is preferred from the new subset, and the probabilistic profile updated based thereon. The process of re-ranking search results and updating the probabilistic profile may be repeated until successive sets of ranked results match each other.

FIG. 1

**Description**

BACKGROUND

The invention generally relates to computers and computer software, and in particular to methods, systems, and computer program products that assign a rank to a travel-related database search result based on a user profile.

Reservation systems for travel related services, such as flights, typically include one or more databases that store data relating to the travel services being offered. These databases may include a fare database containing data used in determining a price of a service, and an availability database containing data used to determine if the service is available. Reservation systems may also provide tools that allow end-users, such as travelers and travel agents, to search for and book travel services that satisfy desired trip criteria. To this end, the tools provided may include one or more machine interfaces that enable other systems to access data from the databases. Systems provided access through these machine interfaces may include a Global Distribution System (GDS), as well as systems operated by travel agencies or other resellers.

To book a travel service, a traveler may access a travel-related website provided by an indirect seller of travel services. As part of the booking process, the traveler may provide search criteria, such as an origin, destination, travel dates, booking class, etc., and launch a search query using the website. In response to receiving the search query, a search engine provided by one of the aforementioned systems may retrieve data from the databases and generate search results comprising travel itineraries that satisfy the search criteria. The quality of search results provided by the travel-related website can be a deciding factor that distinguishes one online seller of travel-related products, such as online travel agents or agencies, from another. Thus, travelers searching online for travel-related products and services, such as priced flights, hotels, or car rentals, may prefer one online seller over another based largely on the quality of search results.

Travel search results provided by websites of online sellers typically display a large number of travel recommendations that match the traveler's search query. As a result, the traveler may be overwhelmed by the sheer number of travel recommendations embodied in the search results. This may hinder selection of a travel recommendation for booking by the traveler, who may have difficulty identifying one search result that they prefer from a large number of similar search results. One consequence of this inability to select a search result may be that the traveler delays their purchase. The traveler may also seek out another seller to obtain the desired travel services. Presenting an excessive number of search results to the traveler may thereby lower the number of purchases per view, or the "conversion rate" for the website. Presenting an excessive number of travel recommendations to the traveler may also make it difficult for the traveler to find what they consider to be the most relevant search results. This may adversely impact customer satisfaction with the online seller, which could lead to the traveler using a different online seller to purchase their travel products.

Thus, improved systems, methods, and computer program products for processing traveler queries and displaying travel-related search results are needed that assist the traveler in selecting a search result from among a large number of search results matching their query.

SUMMARY

In an embodiment of the invention, a method of ranking search results is provided. The method includes receiving search results comprising a plurality of travel itineraries matching a search query. A first travel itinerary and a second travel itinerary may be selected from the plurality of travel itineraries based on a probabilistic profile of a traveler. The method may update the probabilistic profile of the traveler based on an indication the traveler prefers the first travel itinerary to the second travel itinerary. The method may then determine a composite profile of the traveler based on the probabilistic profile, and rank the search results based on the composite profile.

In another embodiment of the invention, an apparatus for ranking search results is provided. The apparatus includes a processor and a memory coupled to the processor. The memory includes program code that, when executed by the processor, causes the apparatus to receive the search results comprising the plurality of travel itineraries matching the search query, and select the first travel itinerary and the second travel itinerary from the plurality of travel itineraries based on the probabilistic profile of the traveler. The apparatus may receive the indication the traveler prefers the first travel itinerary to the second travel itinerary, and update the probabilistic profile of the traveler based on the indication. The apparatus may further determine the composite profile of the traveler based on the probabilistic profile, and rank the search results based on the composite profile.

In another embodiment of the invention, a computer program product is provided that includes a non-transitory computer-readable storage medium including program code. The program code may be configured, when executed by the processor, to cause the processor to receive the search results comprising the plurality of travel itineraries matching the search query, and select the first travel itinerary and the second travel itinerary from the plurality of travel itineraries based on the probabilistic profile of the traveler. The processor may receive the indication the traveler prefers the first travel itinerary to the second travel itinerary, and update the probabilistic profile of the traveler based on the indication. The processor may further determine the composite profile of the traveler based on the probabilistic profile, and rank the search results based on the composite profile.

BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a plurality of computing systems in communication via a network.
FIG. 2 is a diagrammatic view of an exemplary computing system of FIG. 1.
FIG. 3 is a diagrammatic view of a computing system including a travel-related website, a search engine, an itinerary database, and a profile database.
FIG. 4 is a diagrammatic view of a probabilistic profile used by the search engine in FIG. 3.
FIG. 5 is a flow-chart illustrating a process that may be executed by the computing system of FIG. 3 to select search results for display to a traveler.
FIG. 6 is a flow-chart illustrating a process that may be executed by the computing system of FIG. 3 to adapt the probabilistic profile to reflect the personal preferences of the traveler.

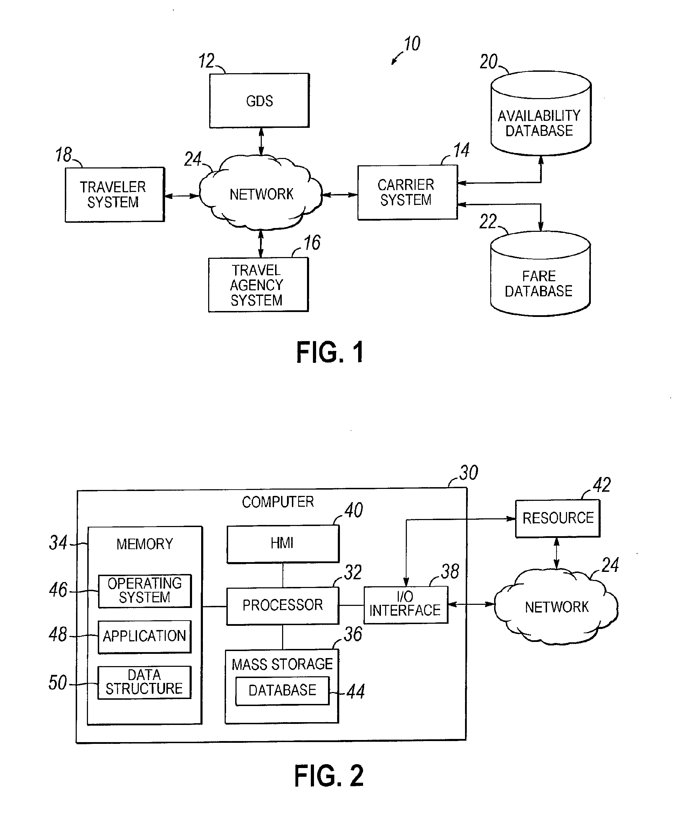

DETAILED DESCRIPTION
Embodiments of the invention may be implemented by a processing and database system, such as a computerized reservation system. The processing and database system may be configured to respond to a travel search query by identifying travel itineraries that satisfy the travel search query, and returning the identified travel itineraries as search results. In the context of air travel, the processing and database system may be embodied in a Global Distribution System (GDS) that identifies travel itineraries including flights from multiple airlines. The GDS may also provide travel itineraries that include services such as train travel, hotel rooms, car rentals, sightseeing, and other travel-related activities.
The processing and database system may include a search engine that receives a search query. The search query may originate from a traveler who is accessing a website of an indirect seller of travel services, such as a travel agency, and may include data defining search criteria, such as an origin, destination, travel dates, booking class, etc. In response to receiving the search query, the search engine may retrieve or otherwise generate travel itineraries that satisfy the search criteria using data in one or more databases. The databases may include databases having caches of pre-computed travel itineraries. The databases may also include service availability and fare databases that provide real-time data from which travel itineraries may be generated.
The search engine may rank the search results according to a composite profile specific to the traveler. The search engine may then select a set of one or more travel itineraries from the search results based on this ranking and display the selected results to the traveler. The search engine may thereby provide the traveler with recommended travel itineraries in accordance with the personal preferences of the traveler. By selecting a set of travel itineraries from the search results for display to the traveler, embodiments of the invention may reduce the number of search results that are transmitted to the traveler, stored in a cache or database of search results, or that must be processed by the processing and database system, as compared to systems that lack this feature. Embodiments of the invention may thereby reduce the processing load on, and improve the performance of, the processing and database system.
The composite profile may be determined based on a probabilistic profile of the traveler. To train the probabilistic profile to match the personal preferences of the traveler, the search engine may select a subset of two or more travel itineraries from the search results based on the probabilistic profile, and request the traveler indicate which travel itinerary is preferred. In response to the traveler indicating a preference between the travel itineraries, the search engine may update the probabilistic profile to optimize identification of the selected travel itinerary by the composite profile. The search engine may then select a new subset of travel itineraries based on the updated probabilistic profile and repeat the training process. The process may be repeated multiple times until the search engine can reliably predict user preferences.
By capturing the personal preferences of the traveler and using these preferences to rank search results, the search engine may accurately determine which search results have a higher value to the traveler. These search results may then be displayed to the traveler so that the traveler is provided with travel itineraries which match their personal preferences without having to sort through a large number of search results. Embodiments of the invention may thereby enable travelers to avoid evaluating an excessive number of travel itineraries to find a preferred choice.
Referring now to FIG. 1, an operating environment 10 in accordance with an embodiment of the invention may include the GDS 12, one or more travel service provider systems, such as carrier system 14, one or more indirect seller systems, such as travel agency system 16, and a traveler system 18. The carrier system 14 may be in communication with one or more databases, such as an availability database 20 and a fare database 22. Each of the GDS 12, carrier system 14, travel agency system 16, and traveler system 18 may communicate through a network 24. The network 24 may include one or more private or public networks (e.g., the Internet) that enable the exchange of data.

The GDS 12 may be configured to facilitate communication between the carrier system 14 and travel agency system 16 by enabling travel agents, validating carriers, or other indirect sellers to book reservations on the carrier system 14 via the GDS 12. The GDS 12 may maintain links to a plurality of carrier systems via the network 24 that enable the GDS 12 to route reservation requests from the validating carrier or travel agency to a corresponding operating carrier. The carrier system 14 and travel agency system 16 may thereby book flights on multiple airlines via a single connection to the GDS 12.

The carrier system 14 may include a Computer Reservation System (CRS) that enables the GDS 12 or travel agency system 16 to reserve and pay for airline tickets. To this end, the carrier system 14 may interact with the availability database 20 and fare database 22 to price and reserve travel services in response to booking requests or other queries from the GDS 12. The carrier system 14 may also interact with other carrier systems (not shown), either directly or through the GDS 12, to enable a validating carrier to sell tickets for seats provided by the operating carrier. The operating carrier may then bill the validating carrier for the services provided.

The travel agency system 16 may provide travel agents with an interface for accessing the GDS 12 that enables agents to search for and book travel itineraries. The travel agency system 16 may also include an application accessible by the traveler system 18 that enables the traveler to search for and book travel itineraries without the help of a travel agent. This application may comprise, for example, a travel-related website that is accessible over the network 24 using a web-browser provided by the traveler system 18.

The traveler system 18 may comprise a desktop computer, laptop computer, tablet computer, smart phone, or any other suitable computing device. The traveler may use the traveler system 18 to search for and book travel services by accessing the GDS 12, carrier system 14, travel agency system 16, or any other suitable system though the network 24. For example, the traveler may launch a browser application, and use the browser application to search for travel services on the website provided by the travel agency system 16, or a website provided by the GDS 12, carrier system 14, or any other suitable system. The traveler may book a selected travel service by entering payment information into the website.

Referring now to FIG. 2, the GDS 12, carrier system 14, travel agency system 16, traveler system 18, availability database 20, and fare database 22 of operating environment 10 may be implemented on one or more computer devices or systems, such as exemplary computer system 30. The computer system 30 may include a processor 32, a memory 34, a mass storage memory device 36, an input/output (I/O) interface 38, and a Human Machine Interface (HMI) 40. The computer system 30 may also be operatively coupled to one or more external resources 42 via the network 24 or I/O interface 38. External resources may include, but are not limited to, servers, databases, mass storage devices, peripheral devices, cloud-based network services, or any other suitable computer resource that may be used by the computer system 30.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, volatile or non-volatile solid state device, or any other device capable of storing information.

The processor 32 may operate under the control of an operating system 46 that resides in memory 34. The operating system 46 may manage computer resources so that computer program code embodied as one or more computer software applications, such as an application 48 residing in memory 34, may have instructions executed by the processor 32. In an alternative embodiment, the processor 32 may execute the application 48 directly, in which case the operating system 46 may be omitted. One or more data structures 50 may also reside in memory 34, and may be used by the processor 32, operating system 46, or application 48 to store or manipulate data.

The I/O interface 38 may provide a machine interface that operatively couples the processor 32 to other devices and systems, such as the network 24 or external resource 42. The application 48 may thereby work cooperatively with the network 24 or external resource 42 by communicating via the I/O interface 38 to provide the various features, functions, applications, processes, or modules comprising embodiments of the invention. The application 48 may also have program code that is executed by one or more external resources 42, or otherwise rely on functions or signals provided by other system or network components external to the computer system 30. Indeed, given the nearly endless hardware and software configurations possible, persons having ordinary skill in the art will understand that embodiments of the invention may include applications that are located externally to the computer system 30, distributed among multiple computers or other external resources 42, or provided by computing resources (hardware and software) that are provided as a service over the network 24, such as a cloud computing service.

The HMI 40 may be operatively coupled to the processor 32 of computer system 30 in a known manner to allow a user to interact directly with the computer system 30. The HMI 40 may include video or alphanumeric displays, a touch screen, a speaker, and any other suitable audio and visual indicators capable of providing data to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

A database 44 may reside on the mass storage memory device 36, and may be used to collect and organize data used by the various systems and modules described herein. The database 44 may include data and supporting data structures that store and organize the data. In particular, the database 44 may be arranged with any database organization or structure including, but not limited to, a relational database, a hierarchical database, a network database, or combinations thereof. A database management system in the form of a computer software application executing as instructions on the processor 32 may be used to access the information or data stored in records of the database 44 in response to a query, where a query may be dynamically determined and executed by the operating system 46, other applications 48, or one or more modules.

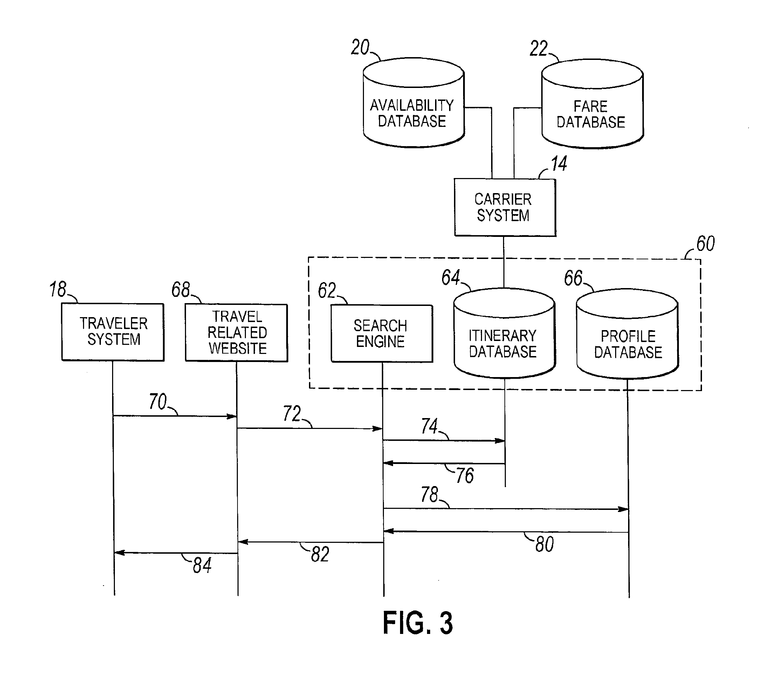

Referring now to FIG. 3, in an exemplary embodiment of the invention, a computer system 60 may provide a search engine 62, an itinerary database 64, and a profile database 66. The computer system 60 may be in communication with the carrier system 14 and a travel-related website 68. In an embodiment of the invention, the computer system 60 may be provided by the GDS 12, and the travel-related website 68 may be provided by the travel agency system 16. However, a person having ordinary skill in the art would understand that computer system 60 and travel-related website 68 could be provided by any suitable computer system.

The traveler may access one or more web-pages provided by the travel-related website 68 using the traveler system 18. The traveler may interact with the web-pages to search for and book travel itineraries. These travel itineraries may comprise one or more travel services, such as flights, hotel rooms, car rentals, or any other travel service. To this end, the traveler system 18 may transmit a search query 70 to the travel-related website 68. The search query 70 may include data defining search criteria, such as an origin and destination, travel dates, and/or booking class. In response to receiving the search query 70, the travel-related website 68 may transmit a search query 72 including data defining the search criteria and traveler identity to the search engine 62.

In response to receiving the search query 72, the search engine 62 may generate and transmit a database search query 74 to the itinerary database 64. In response to receiving the database search query 74, the itinerary database 64 may identify one or more travel itineraries that satisfy the search criteria. The identified travel itineraries may include predetermined travel itineraries stored in a cache or newly determined travel itineraries retrieved from the carrier system 14. The newly determined travel itineraries may be generated in accordance with service availability data (e.g., available seats) received from the availability database 20, and fare data received from the fare database 22. The newly determined travel itineraries may also be stored in the cache and accessed by the itinerary database 64 so that they are available as predetermined travel itineraries for subsequent search queries received by the search engine 62.

In response to identifying the travel itineraries, the itinerary database 64 may transmit a response 76 to the search engine 62 containing search results comprising the identified travel itineraries. While the itinerary database 64 is compiling the search results, or in response to receiving the response 76, the search engine 62 may transmit a query 78 to the profile database 66 that includes data defining the traveler identity. The query 78 may request the profile database 66 provide a user profile for the traveler. If a user profile exists for the traveler, the profile database 66 may transmit the user profile to the search engine 62 in a response 80. If the traveler does not have a user profile, the profile database 66 may transmit a default profile to the search engine 62, or the response 80 may indicate that no user profile exists for the identified traveler. In the latter case, the search engine 62 may generate a default profile for the traveler.

Each user profile may be associated with a composite profile CP comprising a set of coefficients, with each coefficient corresponding to a characteristic of the travel itinerary. The value of each coefficient may indicate how important the corresponding characteristic of the travel itinerary is to the traveler. For example, one of the coefficients may correspond to the total travel time of the itinerary. To provide an indication of how important this characteristic is to the traveler in relation to the monetary cost, or price $C_M$ of the travel products comprising the travel itinerary, the value assigned to the coefficient may have a monetary value (e.g., $20/hour of travel time).

The composite profile $CP$ may be used to determine a "total cost" of the travel itinerary that captures both the price $C_M$ of the travel products and the perceived value added or subtracted for the traveler by specific features of the travel itinerary. Using the above exemplary coefficient of $20/hour to characterize the cost of travel time, a travel itinerary having a total travel time of 4 hours may have a composite profile $CP$ = $80 added to the price $C_M$ of the travel itinerary to reflect the total cost $C_{TOT} = C_M + CP$ to the traveler in question. In contrast, a trip itinerary connecting the same origin and destination, but having a total travel time of 8 hours, may have a $CP$ = \$160 added to the price $C_M$ of the travel itinerary. Thus, in the above example, the price $C_M$ of travel itinerary having the 4 hour travel time would have to be more than \$80 greater than the price $C_M$ of the travel itinerary having the 8 hour travel time in order to have a higher total cost $C_{TOT}$ to the traveler, assuming all other features of the travel itineraries are the same. The composite profile $CP$ may thereby provide a means of determining an overall desirability of the travel itinerary to the traveler in question that captures both the price of the travel products comprising the itinerary and the impact of convenience factors on the traveler.

Once the composite profile $CP$ is known, the search engine 62 may apply the composite profile $CP$ to determine the total cost $C_{TOT}$ for each of the search results in response 80. The search engine 62 may then rank the search results based on their total cost $C_{TOT}$, with search results having a lower total cost $C_{TOT}$ being given a higher rank. The search engine 62 may then transmit a response 82 to the travel-related website 68 that includes at least a portion of the ranked search results selected based on rank. For example, the selected search results may comprise a predetermined number of search results representing the highest ranking search results. In response to receiving the response 82, the travel-related website 68 may format the results and transmit a response 84 to the search query 70 that includes the search results selected by the search engine 62 for display to the traveler. The response 84 may comprise data that causes the browser application running on the traveler system 18 to display a window populated with the selected search results, for example.

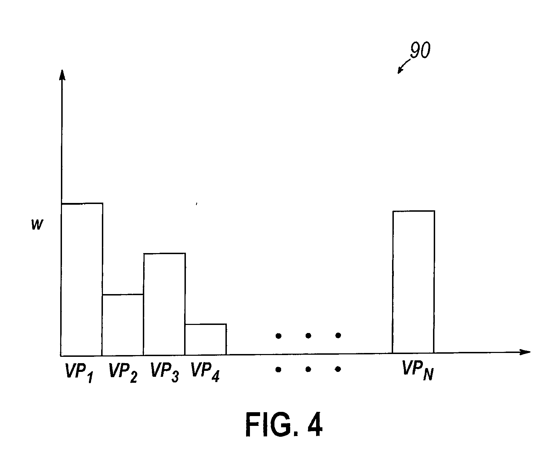

FIG. 4 depicts a diagrammatic view of a probabilistic profile 90 comprising an array of $N$ value profiles $VP_1$ - $VP_N$. Each value profile $VP_1$ - $VP_N$ of the probabilistic profile 90 may comprise a probability, or weight $w_1$ - $w_N$, (represented by the height of each value profile $VP_1$- $VP_N$ along the vertical axis). That is, the probabilistic profile 90 may be represented by an array $[w_1 \times VP_1, w_2 \times VP_2,... w_N \times VP_N]$. Each value profile $VP_1$ - $VP_N$ of the probabilistic profile 90 may further comprise a set of $M$ travel itinerary characteristics $(v_1, v_2, ... v_M)$. The weight $w_1$ - $w_N$ may provide the relative effect of the corresponding value profile $VP_1$ - $VP_N$ in a blending function that provides the composite profile $CP$ of the traveler. To this end, the weight $w_1$ - $w_N$ of each value profile $VP_1$ - $VP_N$ may be determined based to how well the corresponding value profile $VP_1$ - $VP_N$ identifies travel itineraries having the lowest total cost $C_{TOT}$ for the traveler in question from a subset of travel itineraries. The subset of travel itineraries may, for example, comprise two or more travel itineraries selected from a larger set of travel itineraries satisfying a search request.

Each coefficient $v_1$ - $v_M$ of the value profile may describe a value of a corresponding travel itinerary characteristic. By way of example, the coefficients $v_1$ - $v_M$ may include coefficients corresponding to the cost/hour for travel time (e.g., add \$20 for each hour of travel time), a cost/stop for each stop or connection required (e.g., add \$30 for each stopover), a cost/stop for each stop having an overnight stopover requirement (e.g., add \$100 for an overnight stopover), a cost associated with an undesirable carrier (e.g., add \$40 if carrier is Acme Air), a cost associated with an undesirable type of carrier (e.g., add \$50 if carrier is a low-cost carrier), a cost associated with a particular air carrier policy (e.g., add \$40 if carrier only allows one carry-on bag or has a record of excessive delays), or an additional cost if departure is outside a preferred travel time (e.g., add \$30 for flights departing prior to 8AM), to name just a few.

Taking into account all possible levels of willingness to pay for all criteria may result in a number of value profiles $N$ that would be impractical to manage. In an embodiment of the invention, to keep the number of value profiles to a manageable level, the values of each coefficient may be quantized into discrete values. To this end, the costs associated with each coefficient may be quantized to values having fixed increments (e.g., \$10) over a pre-determined range (e.g., \$0 to \$100). By way of example, a value profile consisting of coefficients corresponding to a cost/hour for travel time mapped to a set of values with \$10 increments over the range of \$0 to \$50, and a cost/stop for overnight stopovers, a cost penalty for selecting a carrier that is categorized as undesirable, a cost for an undesirable type of carrier, and a cost for an undesirable time of departure each mapped to a set of values with \$10 increments over the range of \$0 to \$100 would result in $N$= $6 \times 11^4$ = 87,846 value profiles.

The probabilistic profile may be used to drive the search for travel itineraries, and the highest ranking search results selected from the search results output by the search. The probabilistic profile may also be used to select the most relevant recommendations from the output of a non-personalized search for travel itineraries matching the travelers search terms. In either case, the composite profile for the traveler may be constructed from one or more of the value profiles $VP_1$ - $VP_N$. For example, the composite profile $CP$ for the traveler may be determined by taking a sum of the weighted value profiles $VP_1$ - $VP_N$ as follows:

$$CP = \sum_{i=1}^{N} w_i \times VP_i$$

where the weights $w_1$ - $w_N$ are normalized so that:

$$\sum_{i=1}^{N} w_i = 1$$

The resulting composite profile *CP* may provide the set of *M* travel itinerary characteristics $(v_1, v_2, \ldots v_M)$ for the traveler in which each itinerary characteristic $(v_1, v_2, \ldots v_M)$ of the composite profile *CP* comprises the weighted sum of the corresponding itinerary characteristics $(v_1, v_2, \ldots v_M)$ of each of the value profiles $VP_1 - VP_N$.

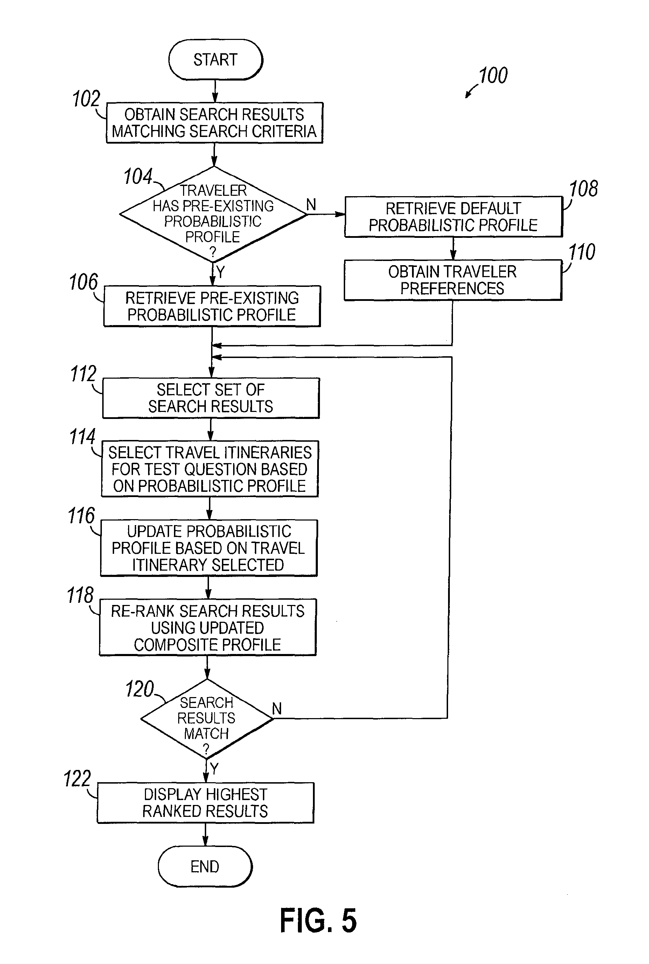

Referring now to FIG. 5, a flow-chart depicts a process 100 that may be performed by the search engine 62, or some other suitable module provided by the computing system 60, to determine the weights $w_1 - w_N$ of each value profile $VP_1 - VP_N$ comprising the probabilistic profile 90 for a specific traveler.

In block 102, the process 100 may obtain search results comprising a plurality of travel itineraries that match a set of search criteria provided by the traveler. These search results may be received, for example, by the search engine 62 in response to transmitting the database search query 74 to the itinerary database 64 as described above with respect to FIG. 3. The process 100 may then proceed to block 104 and determine if the traveler has a pre-existing probabilistic profile 90. The traveler may have a pre-existing probabilistic profile 90 if, for example, the traveler has used the travel-related website on a previous occasion. A returning traveler may be identified based on a data structure stored on the traveler system 18 that identifies the traveler (e.g., an HTTP cookie), a user identity or account number provided to the travel-related website 68, or any other suitable method.

If the traveler is associated with a pre-existing probabilistic profile 90 ("YES" branch of decision block 104), the process 100 may proceed to block 106 and retrieve the probabilistic profile 90 from a data storage location, such as the profile database 66. If the traveler is not associated with a pre-existing probabilistic profile 90, e.g., the traveler is a first time user of the system ("NO" branch of decision block 104), the process 100 may proceed to block 108 and retrieve a default probabilistic profile 90. In an embodiment of the invention, the default probabilistic profile 90 may be a probabilistic profile 90 in which the weights $w_1 - w_N$ have equal values. This may result in a uniform probabilistic value across all criteria used in the value profiles.

By way of example, in an embodiment of the invention, coefficient $v_1$ may provide the cost/hour for travel in $10 increments from $0 to $50, coefficient $v_2$ may provide the cost per stop in $10 increments from $0 to $100, coefficient $v_3$ may provide the cost of the carrier being a low-cost carrier in $10 increments from $0 to $100, coefficient $v_4$ may provide the cost of using a non-favored carrier in $10 increments from $0-$100, and coefficient $v_5$ may provide the cost of including a travel segment departing during a non-preferred time slot. These costs may be added multiple times for a particular itinerary. For example, the cost of an early departure could be added for each leg of the travel itinerary that has an undesirable departure time, e.g., one each for the inbound and outbound legs of the journey.

The process 100 may then proceed to block 110 and present questions to the traveler regarding their travel preferences. Exemplary travel preferences may include preferred airlines, travel times, non-favored carriers, or any other travel preference that could be used to help identify preferred travel itineraries or determine the total cost $C_{TOT}$. The process 100 may then generate a user profile that includes data indicative of the traveler's preferences and probabilistic profile, and save this user profile in the profile database 66 for future use. In response to obtaining either the pre-existing or default probabilistic profile, the process 100 may proceed to block 112.

In block 112, the process 100 may select a set of the search results. To this end, the process 100 may generate the composite profile from the probabilistic profile. The process 100 may then rank the search results using the composite profile, and select the set of search results based on the rank of the search results. For example, the set of search results may comprise a portion of the search results representing the highest ranking search results.

In response to selecting the set of search results, the process 100 may proceed to block 114, and select a subset of travel itineraries (e.g., a pair of travel itineraries $TI_1$, $TI_2$) from the set of search results. The process 100 may then request that the traveler select one travel itinerary from the subset. The travel itineraries may be selected based on the composite profile defined by the probabilistic profile 90 so that each travel itinerary in the subset provides the maximum information on the composite profile. In an alternative embodiment of the invention, more than two travel itineraries may be selected for the subset (e.g., four travel itineraries $TI_1$, $TI_2$, $TI_3$, $TI_4$). In this alternative embodiment, the traveler may be asked to rank the travel itineraries in the subset from best to worst rather than simply selecting one as the most preferred travel itinerary. In response to the process 100 receiving an indication of which travel itinerary the traveler prefers, the process may proceed to block 116.

In block 116, the process 100 may update the probabilistic profile 90 of the traveler based on which travel itinerary the traveler selected. By way of example, for an embodiment in which the subset of travel itineraries comprises two travel itineraries $TI_1$ to $TI_2$, the traveler selecting travel itinerary $TI_1$ over $TI_2$ may indicate that the total cost $C_{TOT}$ of travel itinerary $TI_1$ is less than the total cost $C_{TOT}$ of travel of travel itinerary $TI_2$. That is:

$$C_{TOT}(TI_1) < C_{TOT}(TI_2)$$

Using the exemplary coefficients $VP(v_1, v_2, v_3, v_4, v_5)$ described above, this may mean that:

$$(C_{M2} - C_{M1}) + v_1 \times (t_2 - t_1) + v_2 \times (S_2 - S_1) + v_3 \times (N_{LCC2} - N_{LCC1})$$
$$+ v_4 \times (N_{UDC2} - N_{UDC1}) + v_5 \times (N_{UTS2} - N_{UTS1}) > 0$$

where $t_n$ represents the travel time, $S_n$ represents the number of stopovers, $N_{LCCn}$ represents the number of legs flown on a low-cost carrier, $N_{UDCn}$ represents the number of legs flown on an undesirable carrier, and $N_{UTSn}$ represents the number of undesirable time slots (e.g., early departure times) for the respective travel itinerary $TI_1$, $TI_2$.

The process 100 may use this information to update the travelers composite profile $CP$. To this end, the process 100 may update the probabilistic profile 90 based on an assumption that the traveler is purely rational, or on an assumption that the traveler is not purely rational. Under the purely rational model, the process 100 may only use value profiles $VP_1$ - $VP_N$ that produce a result in agreement with the traveler's selection of travel itinerary $TI_1$ over $TI_2$ in generating the value profile for the traveler. That is, a value profile $VP_i$ that is not compatible with the traveler's choice may be excluded from determining the travelers composite profile $CP$. To this end, the weight $w_i$ of each value profile $VP_i$ that fails to produce a result matching the travel itinerary selection of the traveler may be set to 0. The weights $w_i$ of the value profiles $VP_i$ that produce a result matching the travel itinerary selection of the traveler may then be normalized so that the sum of the remaining non-zero weights is unity.

In some cases, the traveler may select a travel itinerary that is inconsistent with the traveler's previous selections. That is, the traveler's selection may appear irrational. This may be due to the traveler making a mistake, or due to some aspect of the trip varying from the normal parameters, e.g., the traveler is booking personal rather than business travel. To accommodate selections that may be inconsistent with the traveler's actual or normal preferences, the process 100 may update the value profile of the traveler using an "irrational model". Under the irrational model, the weight of each value profile that is consistent with the traveler's choice may be increased from its previous value, and the weight of each value profile that is inconsistent with the traveler's selection may be reduced from its previous value. The amount that the weights are changed may be controlled by a "rationality coefficient" $r$ that is used to determine a multiplier by which the previous weight is multiplied. Under this model, the updated weight $w_i$ of each value profile $VP_i$ that fails to produce a result matching the travel itinerary selection of the traveler may be set to $(1 - r) \times w_i$. so that:

$$w_i(updated) = (1 - r) \times w_i$$

In contrast, the updated weight $w_j$ of each value profile $VP_j$ that produces a result matching the travel itinerary selection of the traveler may be set to:

$$w_j(updated) = w_j \times \frac{1 - (1 - r)\sum w_i}{\sum w_j}$$

The updated weights $w_i$, $w_j$ may thereby depend on the previous weights $w_i$, $w_j$. For a rationality coefficient of $r = 100\%$, the irrational model may provide the same result as the rational model. This model may require taking into account recommended choices one by one to update weights. Under either model, each coefficient of the value profile may be provided by:

$$v_n = \sum_{i=1}^{N} w_i \times v_{n_i}$$

Once the probabilistic profile 90 and composite profile $CP$ have been updated, the process 100 may proceed to block 118 and re-rank the search results using the updated composite profile $CP$. The process 100 may then proceed to block 120 and determine if the search results before the re-ranking match the search results after the ranking. The search results may be considered as matching if there is no difference between the search results before and after the re-ranking, or a difference exists but is considered to be an insignificant difference. A difference may exist, for example, if the ranked order of the search results, or a portion thereof (e.g., the order of ranked results in the set of search results) has changed due to the re-ranking. Whether the difference is considered significant may depend on how many of the results have changed, or the rank of the results that have changed. For example, a change in the order of lower ranking results may be an insignificant difference.

If the search results do not match ("NO" branch of decision block 118), the process 100 may proceed to block 112 and select a new set of search results based on the updated composite profile $CP$. If the search results match ("YES" branch of decision block 118), the process 100 may proceed to block 122 and display a number of the highest ranked search results. The process 100 may also update the user profile of the traveler in accordance with the updated probabilistic profile so that the updated probabilistic profile is retrieved by the process 100 the next time a search query is received from the traveler.

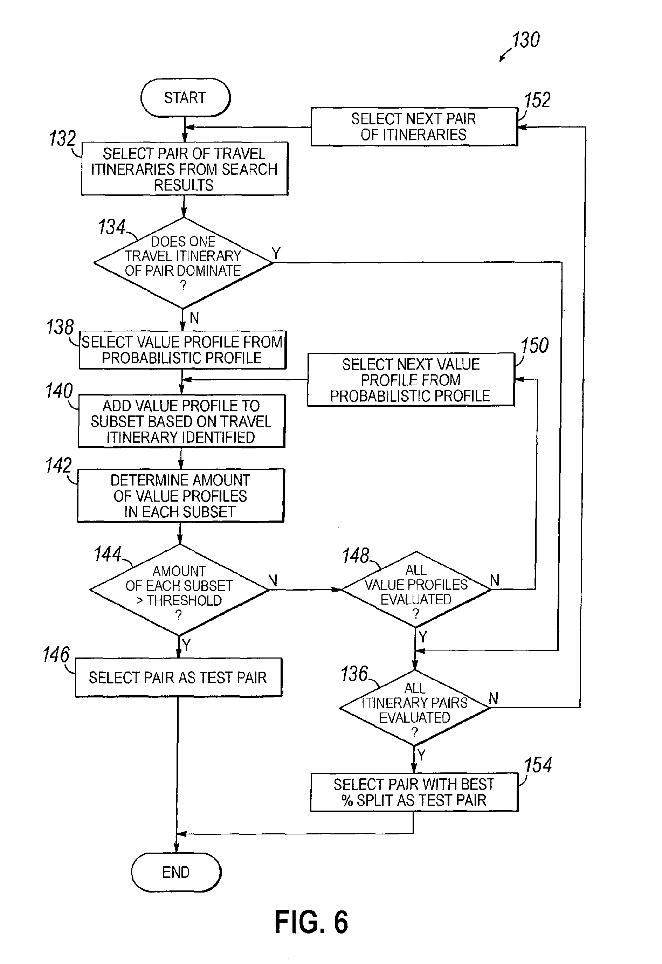

Referring now to FIG. 6, a flow-chart depicts a process 130 that may be performed by the search engine 62, or some other suitable module provided by the computing system 60, to determine which travel itineraries are selected for the set of travel itineraries. Although the exemplary embodiment uses a set of two travel itineraries for simplicity, persons having ordinary skill in the art will understand that sets including more than two travel itineraries may also be used. In block 132, the process 130 may select a pair of travel itineraries from the search results. The initial pair may be selected based on characteristics of the travel itineraries. For example, the process may select travel itineraries based on cost, starting with search results that have the lowest cost. However, the invention is not limited to selections based on cost, or any other specific characteristic or combinations of characteristics of the travel itinerary.

Once the pair of travel itineraries has been selected, the process 130 may proceed to block 134 and determine if one of the travel itineraries in the selected pair "dominates" the other travel itinerary. One travel itinerary may be considered to dominate the other travel itinerary if each criteria of the one travel itinerary has a preferred value as compared to the corresponding criteria of the other travel itinerary. For example, the one travel itinerary is cheaper, faster, has fewer stopovers, is on a preferred carrier, and has preferred departure times as compared to the other travel itinerary. If one of the travel itineraries dominates ("YES" branch of decision block 134), the process may proceed to block 136. If neither travel itinerary of the pair dominates the other ("NO" branch of decision block 134), the process 130 may proceed to block 138.

In block 138, the process 130 may select a value profile $VP_i$ from the probabilistic profile of the traveler, and determine the total cost $C_{TOT}$ of each travel itinerary of the pair of travel itineraries using the selected value profile $VP_i$. In an embodiment of the invention, the process 130 may select value profiles $VP_i$ in an order that gives a preference to value profiles $VP_i$ having coefficient values in the middle of the allowable range of coefficient values. Beginning the selection process using value profiles $VP_i$ near the middle may allow the process 130 to select a suitable test pair of travel itineraries more quickly than by randomly selecting the value profile $VP_i$.

When the value profile $V_{Pi}$ has been selected, the process 130 may proceed to block 140 and add the value profile $V_{Pi}$ to one of two subsets of value profiles $VP_i$ based on which travel itinerary is identified as having the lowest total cost $C_{TOT}$ by the value profile. Thus, one subset of value profiles $VP_i$ may be populated with value profiles $VP_i$ that produce the lowest total cost $C_{TOT}$ for one of the travel itineraries of the pair, and the other subset of value profiles $VP_i$ may be populated with value profiles $VP_i$ that produce the lowest total $C_{TOT}$ for the other of the travel itineraries of the pair.

In an embodiment of the invention, additional value profiles $VP_i$ from the probabilistic profile may be added to a corresponding subset of value profiles $VP_i$ based on the relative values of their coefficients. To this end, and by way of example, for the pair of travel itineraries $TI_1$ and $TI_2$, the previously described equation:

$$(C_{M2} - C_{M1}) + v_1 \times (t_2 - t_1) + v_2 \times (S_2 - S_1) + v_3 \times (N_{LCC2} - N_{LCC1})$$
$$+ v_4 \times (N_{UDC2} - N_{UDC1}) + v_5 \times (N_{UTS2} - N_{UTS1}) > 0$$

indicates that the value profile $VP_i$ identifies travel itinerary $TI_1$ as having a lower total cost $C_{TOT}$. In this exemplary case, if $(t_2 - t_1)$ is positive, the process 130 may determine that all other value profiles $VP_i$ having a coefficient $v_1$ with a value greater than the coefficient $v_1$ of the present value profile $VP_i$ would also identify travel itinerary $TI_1$ as the preferred travel itinerary if the other coefficients $v_2$, $v_3$, $v_4$, $v_5$ are equal in value to those of the present value profile $VP_i$. Conversely, if $(t_2 - t_1)$ is negative, the process 130 may determine that all other value profiles $VP_i$ having a coefficient $v_1$ with a value less than the coefficient $v_1$ of the present value profile $VP_i$ would identify travel itinerary $TI_1$ as the preferred travel itinerary if the other coefficients $v_2$, $v_3$, $v_4$, $v_5$ are equal in value to those in the present value profile $VP_i$. This principle may be extended to the other coefficients to reduce the number of iterations the process 130 must execute. The value profiles $VP_i$ that identify travel itineraries $TI_1$ or $TI_2$ may thereby be determined more quickly than would be possible if by evaluating each value profile $VP_i$ individually.

In response to adding the additional value profile $VP_i$ to one of the subsets, the process 130 may proceed to block 142 and determine if each subset of value profiles has at least a minimum amount of value profiles $VP_i$. The amount of the value profiles $VP_i$ in each subset of value profiles $VP_i$ may be determined based on a cumulative weight of the value profiles $VP_i$ in each subset. The cumulative weight may be determined, for example, by summing the weight $w_i$ of each value profile $VP_i$ in the subset being evaluated.

The process 130 may then proceed to block 144 and determine if the cumulative weight of each subset of value profiles $VP_i$ exceeds a minimum amount, or threshold (e.g., 40% of the cumulative weight of all the value profiles in the probabilistic profile). If each of the subsets has a cumulative weight exceeding the threshold ("YES" branch of decision block 144), the process 130 may proceed to block 146 and select the pair of travel itineraries as the test pair. If the cumulative weight of each subset does not exceed the threshold ("NO" branch of decision block 144), the process 130 may proceed to block 148.

In block 148, the process 130 may determine if all the value profiles $VP_1$ - $VP_N$ of the probabilistic profile have been evaluated and assigned to one of the subsets of value profiles $VP_i$. If all the value profiles $VP_1$ - $VP_N$ have not been evaluated ("NO" branch of decision block 148), the process may proceed to block 150 and select the next unevaluated value profile $VP_i$ from the probabilistic profile before proceeding to block 140 to repeat the evaluation process. If all the value profiles $VP_1$ - $VP_N$ have been evaluated ("YES" branch of decision block 148), the process 130 may proceed to block 136.

In block 136, the process 130 may determine if all possible pairs of travel itineraries have been evaluated. That is, are there any unique combinations of travel itineraries from the search results that have not been evaluated. If not all possible pairs of travel itineraries have been evaluated ("NO" branch of decision block 136), the process 130 may proceed to block 152 and select the next pair of travel itineraries before proceeding to block 134 to begin the evaluation process.

If all possible pairs of travel itineraries have been evaluated ("YES" branch of decision block 136), the process 130 may proceed to block 154. In block 154, the process 130 may determine which pair of travel itineraries produced the most even split between the cumulative weight of each subset of value profiles $VP_i$. That is, the process 130 may determine which pair of travel itineraries produced subsets of value profiles $VP_i$ with the smallest difference between their cumulative weights. This may identify subsets in which the cumulative weight is as close to 50% of the total cumulative weight of all the value profiles $VP_1$ - $VP_N$ in the probabilistic profile. The process 130 may then select this pair of travel itineraries as the subset of travel itineraries.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow-charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow-charts, sequence diagrams, and/or block diagrams.

In certain alternative embodiments, the functions, acts, and/or operations specified in the flow-charts, sequence diagrams, and/or block diagrams may be re-ordered, processed serially, and/or processed concurrently consistent with embodiments of the invention. Moreover, any of the flow-charts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

**Claims**

1. A method of ranking search results, the method comprising:

   transmitting, by a computer, a search query to a database;
   receiving, by the computer, first search results from the database, the first search results comprising a first plurality of travel itineraries matching the search query;
   selecting, by the computer, a first travel itinerary and a second travel itinerary from the first plurality of travel itineraries based on a probabilistic profile of a traveler;
   receiving, at the computer, a first indication the traveler prefers the first travel itinerary to the second travel itinerary;
   updating, by the computer, the probabilistic profile of the traveler based on the first indication;
   determining, by the computer, a composite profile of the traveler based on the probabilistic profile; and
   ranking, by the computer, the first search results based on the composite profile.

2. The method of claim 1 wherein the probabilistic profile comprises a plurality of value profiles each having a weight, and determining the composite profile comprises:

   multiplying each value profile by its weight to generate a weighted value profile; and
   summing the weighted value profiles to generate the composite profile.

3. The method of claim 2 wherein updating the probabilistic profile comprises:

   determining a first subset of the value profiles that identify the first travel itinerary as a preferred travel itinerary;
   determining a second subset of the value profiles that identify the second travel itinerary as the preferred travel itinerary; and
updating the weight of each value profile based on whether the value profile is in the first subset or the second subset.

4. The method of claim 3 wherein updating the weight of each value profile comprises:

multiplying the weight of the value profile by a first multiplier if the value profile is in the first subset; and
multiplying the weight of the value profile by a second multiplier if the value profile is in the second subset.

5. The method of claim 3 or claim 4 wherein updating the weight of each value profile comprises:

setting the weight of the value profile to a first weight if the value profile is in the first subset; and
setting the weight of the value profile to a second weight if the value profile is in the second subset.

6. The method of any of claims 3 to 5 further comprising:

normalizing the updated weights across the plurality of value profiles so that a sum of the updated weights is unity.

7. The method of any of claims 3 to 6 further comprising:

determining a first cumulative weight of the value profiles in the first subset;
determining a second cumulative weight of the value profiles in the second subset; and
selecting the first travel itinerary and the second travel itinerary so that the first cumulative weight and the second cumulative weight each exceed a threshold.

8. The method of claim 1 wherein the probabilistic profile comprises a plurality of value profiles each having a weight, and selecting the first travel itinerary and the second travel itinerary from the first plurality of travel itineraries based on the probabilistic profile of the traveler comprises:

selecting a pair of travel itineraries from the first plurality of travel itineraries;
determining a first subset of the value profiles that identify one travel itinerary of the pair of travel itineraries as a preferred travel itinerary, and a second subset of the value profiles that identify another travel itinerary of the pair of travel itineraries as the preferred travel itinerary;
determining a first amount of the value profiles in the first subset and a second amount of the value profiles in the second subset; and
in response to both the first amount and the second amount exceeding a minimum amount, designating the pair of travel itineraries as the first travel itinerary and the second travel itinerary.

9. The method of claim 8 further comprising:

in response to either the first amount or the second amount not exceeding the minimum amount, repeating the selecting of the pair of travel itineraries and the determining of the first subset and the second subset until either both the first amount or the second amount are above the minimum amount, or all possible pairs of travel itineraries have been selected; and
in response to all possible pairs of travel itineraries being selected without the first amount or the second amount being above the minimum amount, designating the pair of travel itineraries that result in a smallest difference between the first amount and the second amount as the first travel itinerary and the second travel itinerary.

10. The method of claim 8 or claim 9 wherein selecting the pair of travel itineraries from the first plurality of travel itineraries further comprises:

determining if the one travel itinerary of the pair of travel itineraries dominates the other travel itinerary of the pair of travel itineraries; and
in response to the one travel itinerary dominating the other travel itinerary, selecting another pair of travel itineraries from the first plurality of travel itineraries.

11. The method of any of claims 1 to 10 further comprising:

retrieving second search results from the database based on the updated probabilistic profile, the second search results comprising a second plurality of travel itineraries; and

in response to determining a difference exists between the first plurality of travel itineraries and the second plurality of travel itineraries:

selecting a third travel itinerary and a fourth travel itinerary from the second plurality of travel itineraries;

receiving a second indication the traveler prefers the third travel itinerary over the fourth travel itinerary; and

updating the probabilistic profile of the traveler based on the second indication.

12. The method of claim 11 further comprising:

replacing the first plurality of travel itineraries with the second plurality of travel itineraries; and

repeating retrieving the second search results from the database based on the updated probabilistic profile, selecting the third travel itinerary and the fourth travel itinerary from the second plurality of travel itineraries, receiving the second indication the traveler prefers the third travel itinerary over the fourth travel itinerary, and updating the probabilistic profile of the traveler based on the second indication until the first plurality of travel itineraries matches the second plurality of travel itineraries.

13. An apparatus for ranking search results, the apparatus comprising:

a processor; and

a memory coupled to the processor, the memory storing data structures comprising a database of travel itineraries and program code that, when executed by the processor, causes the apparatus to:

transmit a search query to the database;

receive first search results from the database, the first search results comprising a first plurality of travel itineraries matching the search query;

select a first travel itinerary and a second travel itinerary from the first plurality of travel itineraries based on a probabilistic profile of a traveler;

receive a first indication the traveler prefers the first travel itinerary to the second travel itinerary;

update the probabilistic profile of the traveler based on the first indication;

determine a composite profile of the traveler based on the probabilistic profile; and

rank the first search results based on the composite profile.

14. The apparatus of claim 13 wherein the program code, when executed by the processor, causes the apparatus to perform the method of any of claims 2 to 12.

15. A computer program that, when executed by a processor, causes the processor to:

transmit a search query to a database of travel itineraries;

receive search results from the database, the search results comprising a plurality of travel itineraries matching the search query;

select a first travel itinerary and a second travel itinerary from the plurality of travel itineraries based on a probabilistic profile of a traveler;

receive an indication the traveler prefers the first travel itinerary to the second travel itinerary;

update the probabilistic profile of the traveler based on the indication;

determine a composite profile of the traveler based on the probabilistic profile; and

rank the search results based on the composite profile.

**FIG. 1**

**FIG. 2**

**FIG. 3**

FIG. 4

FIG. 5

*130*

START

SELECT NEXT PAIR OF ITINERARIES — *152*

*132* SELECT PAIR OF TRAVEL ITINERARIES FROM SEARCH RESULTS

*134* DOES ONE TRAVEL ITINERARY OF PAIR DOMINATE ? — Y

N

*138* SELECT VALUE PROFILE FROM PROBABILISTIC PROFILE

SELECT NEXT VALUE PROFILE FROM PROBABILISTIC PROFILE — *150*

*140* ADD VALUE PROFILE TO SUBSET BASED ON TRAVEL ITINERARY IDENTIFIED

*142* DETERMINE AMOUNT OF VALUE PROFILES IN EACH SUBSET

*144* AMOUNT OF EACH SUBSET > THRESHOLD ? — N

*148* ALL VALUE PROFILES EVALUATED ? — N

Y

*146* SELECT PAIR AS TEST PAIR

Y

*136* ALL ITINERARY PAIRS EVALUATED ? — N

Y

SELECT PAIR WITH BEST % SPLIT AS TEST PAIR — *154*

END

FIG. 6

**Europäisches Patentamt**
**European Patent Office**
**Office européen des brevets**

# EUROPEAN SEARCH REPORT

Application Number

EP 15 29 0036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/305984 A1 (BEN-YITSCHAK OPHIR [US] ET AL) 2 December 2010 (2010-12-02) * paragraph [0041] - paragraph [0044] * * paragraph [0234] * * paragraph [0296] - paragraph [0305] * ----- | 1-15 | INV. G06Q50/14 G06Q30/06 G06Q10/02 |
| X | US 2014/108070 A1 (VERNITSKY ALEK [US] ET AL) 17 April 2014 (2014-04-17) * paragraph [0073] - paragraph [0078] * ----- | 1-15 | |

TECHNICAL FIELDS
SEARCHED (IPC)

G06Q

The present search report has been drawn up for all claims

| Place of search | Date of completion of the search | Examiner |
|---|---|---|
| Munich | 4 May 2015 | Lopes Margarido, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 059 707 A1

**ANNEX TO THE EUROPEAN SEARCH REPORT
ON EUROPEAN PATENT APPLICATION NO.**

EP 15 29 0036

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2015

| Patent document cited in search report | Publication date | Patent family member(s) | Publication date |
|---|---|---|---|
| US 2010305984 A1 | 02-12-2010 | NONE | |
| US 2014108070 A1 | 17-04-2014 | NONE | |